# FASCICULE DE BREVET EUROPEEN

(11) **EP 4 255 648 B1**
(45) Date de publication et mention de la délivrance du brevet: **05.02.2025**
(21) Numéro de dépôt: 21831231.2
(22) Date de dépôt: 01.12.2021
(51) Int. Cl.: B09C 1/06, B09C 1/08

(54) **COMBINAISON DE TECHNIQUES DE DÉPOLLUTION: DÉSORPTION THERMIQUE IN SITU ET IMMOBILISATION**
KOMBINATION VON ENTGIFTUNGSTECHNOLOGIEN: IN SITU WÄRMEDESORPTION UND STILLLEGUNG
COMBINATION OF REMEDIATION TECHNOLOGIES: IN SITU HEAT DESORPTION AND IMMOBILISATION

(30) Priorité: 02.12.2020 BE 202000124
(43) Date de publication de la demande: 11.10.2023
(73) Titulaire: Haemers Technologies Société Anonyme, 1120 Bruxelles (BE)
(72) Inventeur: HAEMERS, Jan, 1120 Bruxelles (BE); SAADAOUI, Hatem, 1120 Bruxelles (BE); JORDENS, Aline, 1120 Bruxelles (BE)
(74) Mandataire: Brantsandpatents bv
(86) Numéro de dépôt international: PCT/EP2021/083740
(87) Numéro de publication internationale: WO 2022/117633

(56) Documents cités:
- WO-A1-2016/062757

## Description

### DOMAINE DE L'INVENTION

La présente invention concerne un système de combinaison de technologies de dépollution des sols contaminés. En particulier, l'invention concerne un procédé de couplage des technologies de désorption thermique et de stabilisation In Situ. L'invention a pour objectif de traiter des sols contenant des cocktails de contamination, présentant de multiples contaminations, tels que les sols présentant des polluants volatiles et semi-volatiles ainsi que des métaux lourds.

### CONTEXTE DE L'INVENTION

La contamination des sols est devenue un sujet de grande préoccupation. Le sol peut être contaminé par des contaminants chimiques, biologiques et / ou radioactifs. Les déversements de matériaux, les récipients de stockage qui fuient et les infiltrations dans les décharges de matériaux ne sont que quelques exemples des nombreuses façons dont le sol peut être contaminé. S'ils sont laissés en place, bon nombre de ces contaminants se retrouveront dans les aquifères, l'air ou dans l'approvisionnement alimentaire et pourraient présenter des risques pour la santé publique.

Les technologies de traitement des sols peuvent être classées en trois grandes catégories : thermique, biologique et physico-chimique. Le choix d'une technique par rapport à une autre dépend de facteurs tels que la nature des contaminants, les caractéristiques du sol, les contraintes physiques du site et les coûts.

Il existe de nombreuses méthodes proposées pour éliminer les contaminants du sol, telles que l'excavation suivie de l'incinération, la vitrification in situ, le traitement biologique, les additifs chimiques, le chauffage par radiofréquence, etc. Bien que fonctionnant dans certaines applications, ces méthodes peuvent être très coûteuses et ne sont pas pratiques si de grandes quantités de terre doivent être traitées.

En particulier lorsque des polluants organiques et inorganiques sont présents dans le même sol, les solutions actuelles sont peu nombreuses et peu efficaces et/ou coûteuses.

La présente invention combine deux technologies de dépollution des sols : la désorption thermique et l'immobilisation In Situ.

### DESCRIPTION

### Désorption thermique

Selon la présente invention, lesdits matériaux sont d'abord chauffés par conduction thermique et sous légère dépression à une température et une dépression suffisante pour provoquer la vaporisation desdits contaminants. Les matériaux sont chauffés par conduction thermique en insérant des éléments chauffants dans lesdits matériaux. En plus de permettre une plus grande élimination des contaminants des sols, l'augmentation de la chaleur du sol peut entraîner une altération chimique des contaminants avant leur élimination. WO2016062757A1 et US7618215B2 sont reconnus comme art antérieur de l'invention.

En particulier, la désorption thermique est une technologie qui repose sur le chauffage du sol pour que les contaminants soient volatilisés. Une fois à l'état gazeux, les polluants peuvent être extraits du sol afin d'être détruits ou récupérés après condensation. La désorption thermique est efficace contre tous les contaminants organiques, ainsi que quelques polluants inorganiques tels que les cyanures et le mercure. Elle est efficace contre tous les composés dont la température de volatilisation à pression atmosphérique est inférieure à 550°C.

Le chauffage par conduction thermique est l'un des moyens pour mettre en œuvre la désorption thermique. Dans cette application, l'énergie thermique provenant des tubes chauffants se propage radialement dans le sol. Cette technique présente plusieurs avantages par rapport aux autres approches de traitement des sols. Elle est capable d'atteindre des températures de sol supérieures à 350°C (ce qui n'est par exemple pas possible avec un chauffage électrique résistif - comme dans US9347302B2), permettant un nettoyage rapide d'un grand nombre de contaminants, quelle que soit l'hétérogénéité du sol. Il est applicable aussi bien ex situ qu'in situ. Dans la désorption thermique ex situ (ESTD), le sol est excavé et mis en tas, qui est ensuite traité. Dans la désorption thermique in situ (ISTD), les tubes de chauffage sont directement insérés dans la zone polluée. Cela évite l'excavation et le transport du sol, et permet de traiter les sols dont l'espace et/ou l'accès sont limités, tels que les sites éloignés ou urbains, la construction de souterrains, etc. Globalement, cela permet de gagner un temps important et de réduire l'impact environnemental du traitement.

Un processus qui peut être utilisé pour éliminer les contaminants du sol souterrain est un processus d'extraction de vapeur du sol. Dans un tel processus, un vide est appliqué au sol pour aspirer l'air et la vapeur à travers le sol souterrain. Le vide peut être appliqué à une interface sol / air, ou le vide peut être appliqué à travers des puits à vide placés dans le sol. L'air et la vapeur peuvent entraîner et transporter des contaminants volatils vers la source du vide. Les effluents gazeux retirés du sol par le vide qui comprend les contaminants qui se trouvaient dans le sol sont ensuite transportés vers une installation de traitement où ils sont traités pour éliminer ou réduire les contaminants à des niveaux acceptables. La désorption thermique in situ peut être utilisée pour augmenter l'efficacité d'un processus d'extraction de vapeur de sol. La désorption thermique in situ implique un chauffage in situ du sol pour élever la température du sol tout en éliminant simultanément les effluents gazeux du sol. La chaleur ajoutée au sol contaminé peut élever la température du sol au-dessus des températures de vaporisation des contaminants dans le sol et provoquer la vaporisation des contaminants. Un vide appliqué au sol permet d'extraire le contaminant vaporisé du sol.

Le chauffage par conduction thermique d'un sol contaminé en combinaison avec l'élimination des gaz contaminants du sol à l'aide d'un système d'extraction de vapeur est ancien dans l'art.

### Limites de la désorption thermique

Le traitement thermique consiste à chauffer les matériaux contaminés pour en extraire les polluants volatils et semi-volatils sous formes de vapeurs. Le traitement thermique ne propose aucune solution concernant la plupart des métaux lourds. L'assainissement des sols présentant des contaminations complexes et combinées est un défi depuis des décennies. Les technologies actuelles, et par exemple la désorption thermique, sont assez efficaces pour traiter des contaminants spécifiques; cependant, les sites présentant des combinaisons de contamination organique et métallique n'ont pas été remédiés avec la même efficacité que les cas de polluants uniques. L'invention décrite s'attaque à ce problème très répandu en combinant la désorption thermique in situ (ISTD), qui a été prouvée efficace contre les contaminations organiques complexes, avec l'immobilisation in situ qui a déjà donné des résultats prometteurs sur l'immobilisation à froid des métaux lourds.

### Immobilisation In Situ

L'invention vise à diminuer la mobilité, la biodisponibilité et la bioaccessibilité des contaminants en combinant le traitement thermique In Situ avec l'immobilisation In Situ en injectant des nanoparticules, par exemples des oxydes de fer adsorbants, dans la matrice du sol. Ces particules fixent les métaux lourds (cations), y compris le plomb, le cuivre, le nickel, le zinc, etc.

La nano-remédiation consiste à injecter des nanoparticules dans la zone vadose d'un sol et/ou dans une nappe souterraine. Les particules réactives dégradent ou immobilisent les polluants. Si les nanomatériaux sont déjà utilisés dans des sites de dépollution à froid, les applications en combinaison avec un chauffage conductif sont nouvelles.

La présente invention se base sur l'utilisation de particules comme des oxydes de fer dans la nappe et dans la zone vadose pour l'élimination des métaux lourds et/ou des cyanures et/ou des composés alkyles polyfluorés (PFAS), les particules d'oxyde de fer colloïdal en suspension adsorbant les métaux lourds et/ou les cyanures et/ou les composés alkyles polyfluorés liés. Les particules d'oxyde de fer possèdent des constituants nanocristallins qui permettent aux métaux lourds et/ou aux cyanures et/ou aux composés alkyles fluorés d'être adsorbés ou liés aux particules utilisées. Les particules sont ensuite agglomérées et précipitées avec ou sans l'aide de floculants.

WO2020114556A1 est reconnu comme art antérieur de l'invention, dans lequel est décrit le processus d'adsorption des contaminants et le processus de floculation pour éliminer les métaux lourds et les cyanures des eaux industrielles et minière.

Selon la présente invention, les particules d'oxyde de fer sont introduites dans des zones saturées et insaturées contaminées auxquelles peuvent être ajoutées des solutions de sels de métaux alcalino-terreux de concentration variable. L'agrégation des particules d'oxyde de fer après l'entrée des particules et l'ajout des solutions de sels de métaux alcalino-terreux peut être utilisée comme composant fixe pour l'adsorption ou la liaison des métaux lourds et/ou des cyanures et/ou des composés alkyles polyfluorés. Selon l'art antérieur, les solutions de métaux alcalino-terreux sont ajoutées de telle manière qu'après l'ajout des particules d'oxyde de fer, les solutions de métaux alcalino-terreux sont ajoutées progressivement et une valeur de pH est fixée qui empêche les particules de s'agréger et d'adsorber ou de fixer des contaminants tels que les métaux lourds et/ou les cyanures et/ou les composés alkyles polyfluorés sur les particules. Le pH est ajusté dans une fourchette de 6,0 à 9,0. Lorsque les eaux usées sont ajoutées, une variable de concentration, c'est-à-dire 5 à 10 fois la quantité d'une solution contenant un métal alcalino-terreux, en particulier une solution contenant des ions calcium ou magnésium, est ajoutée aux particules d'oxyde de fer. De ce fait, les métaux lourds et/ou les cyanures et/ou les composés alkyles polyfluorés peuvent être adsorbés ou liés aux particules, et les particules peuvent alors s'agglomérer et précipiter.

### DESCRIPTION BRÈVE DES FIGURES

figure. 1 est une illustration de la première étape de la combinaison des technologies de désorption thermique In Situ et de stabilisation In Situ
figure. 2 est une illustration de la deuxième étape de la combinaison des technologies de désorption thermique In Situ et de stabilisation In Situ
figure. 3 est une illustration de la troisième étape de la combinaison des technologies de désorption thermique In Situ et de stabilisation In Situ
figure 4 est une illustration de la quatrième étape de la combinaison des technologies de désorption thermique In Situ et de stabilisation In Situ
figure 5 est une illustration du système d'extraction des vapeurs contaminées
figure 6 est une illustration du système d'injection des nanoparticules

### DESCRIPTION DÉTAILLÉE DE L'INVENTION

### Définitions

Les termes "sol contaminé" et "matériau contaminé" sont utilisés ici comme synonymes et doivent être compris comme incluant tous les types de sols, de boues ou autres matériaux qui peuvent être contaminés par tout cocktail de polluants, tels que des contaminants organiques, par exemple les hydrocarbures, et inorganiques, dont la température d'ébullition à pression atmosphérique est inférieure ou supérieure à 550°C et/ou des métaux lourds.

La chaleur par conduction a lieu lorsque deux matériaux ou objets matériels sont en contact direct et que la température de l'un est supérieure à la température de l'autre. La conduction thermique consiste en un transfert d'énergie cinétique du milieu le plus chaud vers le plus froid. Le terme "conduction" tel qu'il est utilisé ici est donc destiné à désigner tous les types de transfert de chaleur dans lesquels la chaleur est déplacée d'un objet (plus chaud) à un autre objet (plus froid) par contact direct. Il doit être entendu que dans la présente invention, lorsque le transfert de chaleur par conduction est mentionné, également une très petite quantité de chaleur est généralement également transférée au sol au moyen d'un rayonnement.

### L'invention

La présente invention concerne un procédé de remédiation d'un sol contenant des contaminants organiques et métalliques, telles que les terres contaminées par des hydrocarbures mais également des métaux lourds.

La présente invention propose un procédé de nettoyage de sols contaminés basé sur la technologie de désorption thermique In Situ. Les zones contaminées sont portées aux températures requises pendant la durée nécessaire afin de vaporiser les composés volatils et semi-volatils. Les métaux lourds ne sont pas traitables pas cette technologie.

La technologie d'immobilisation par injection de nanoparticules se concentre sur la fixation des contaminants de métaux lourds, des eaux souterraines, mais également dans la zone vadose, en utilisant par exemple des nanoparticules d'oxyde de fer. Les particules colloïdales restent stables en suspension aqueuse, pouvant ainsi être introduites dans la matrice poreuse des sols et des aquifères aux concentrations souhaitées et adsorber les métaux, ce qui réduit considérablement leur biodisponibilité et leur potentiel de lixiviation. Les particules adsorbent et fixent des métaux lourds tels que par exemple l'Arsenic, le Plomb, le Zinc, le Nickel et le Cadmium.

La présente invention porte sur la combinaison, en séquences bien spécifiques, de la désorption thermique In Situ et de l'immobilisation des métaux In Situ afin de traiter les sites contaminés par tout type de polluant.

La désorption thermique peut être utilisée dans les couches de sol saturées et non saturées. À l'origine, la stabilisation par des nanoparticules d'oxyde de fer a été développée pour l'assainissement des eaux souterraines. Une des innovations que présente l'invention est leur utilisation dans la zone supérieure non saturée. La combinaison des deux techniques permet de couvrir toutes les couches et tous les contaminants présents dans les sites d'intérêt. Une des principales innovations de l'invention est de traiter la contamination à la source, tant dans la zone vadose que dans la zone saturée, avec l'élimination de tous les contaminants organiques et l'immobilisation durable des métaux lourds. Cela représente un grand pas en avant par rapport à l'état actuel de la technique, ces sites complexes n'étant soit actuellement pas traités, soit entièrement excavés. L'invention, combinant la technologie de désorption thermique et l'immobilisation In Situ, peut être utilisée sur les sites les plus complexes, en s'attaquant à la gamme complète des contaminants (organiques et inorganiques), fournissant ainsi une solution durable pour la réutilisation des zones contaminées complexes et de grande taille, conduisant à leur réutilisation bénéfique.

Dans un mode de réalisation préféré, les tubes perforés de récupération sont utilisés alternativement pour l'injection de nano-particules sous forme colloïdale Dans un mode de réalisation préféré, un réseau séparé d'injection de nanoparticules colloïdales est placé à une équidistance des tubes de chauffe ;
La présente invention présente un plan d'application en quatre phases pour l'assainissement des sites pollués par des cocktails de contaminants. Ce plan cible les polluants dans le sol et les eaux souterraines. Ces étapes comprennent le traitement thermique du sol, le refroidissement du sol avec une suspension de nanoparticules, le traitement thermique des eaux souterraines et enfin la nano-réhabilitation des eaux souterraines avec une suspension de nanoparticules. L'ordre des quatre phases d'application détaillées plus bas est interchangeable.

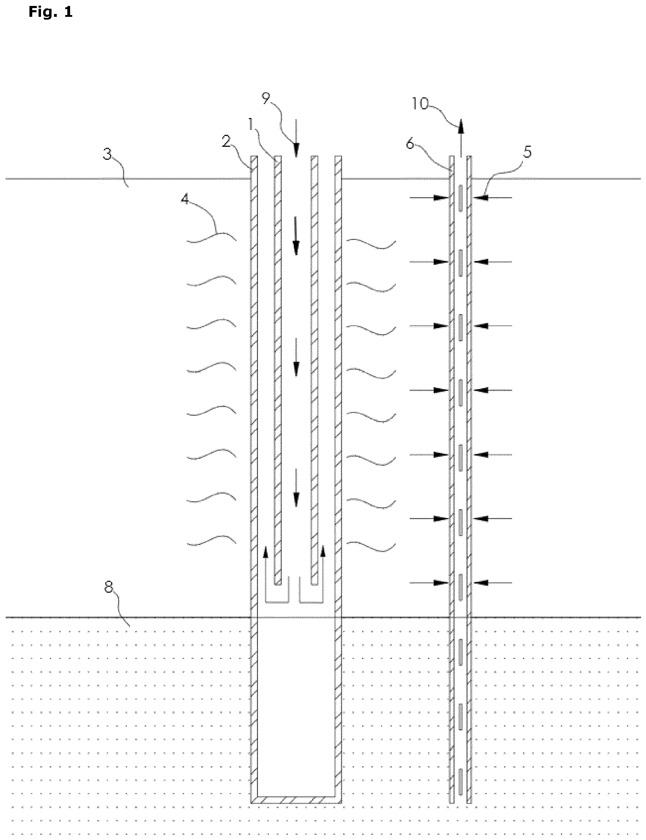

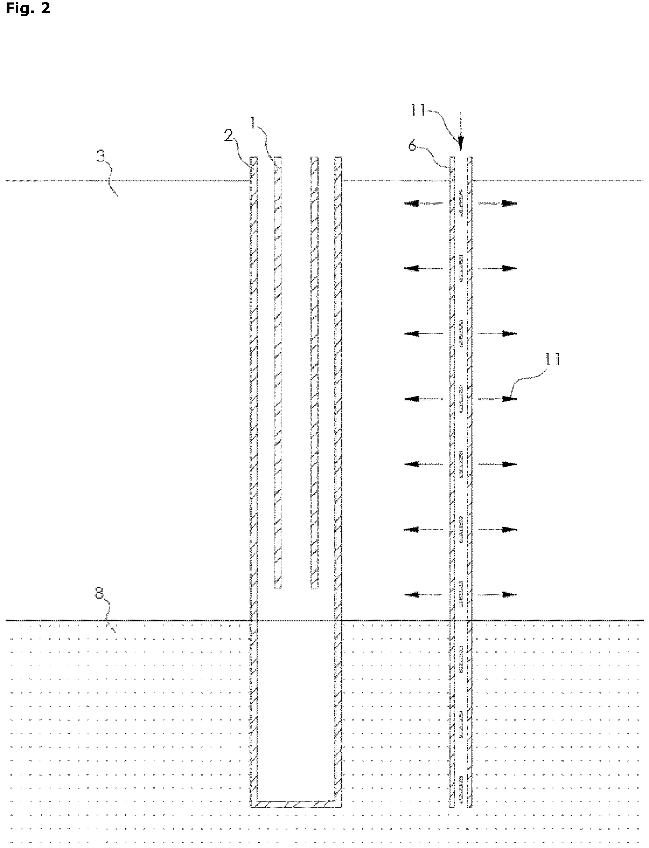

La présente invention concerne un système avec un certain nombre de tubes perforés et non-perforés thermo-conducteurs placés dans un sol. Les tuyaux (1) (2) sont en communication avec une source de chaleur qui fait circuler un fluide chauffé à travers les tubes : du tube de chauffe interne (1) au tube de chauffe externe (2), entrainant l'élévation de la température du sol environnant (3). Des tubes perforés (6) sont placés autour des tubes de chauffe. Dans certaines étapes du plan d'application (figure 1, figure 3, figure 5) les tubes perforés (6) sont mis en dépression, acheminant les vapeurs polluées vers un système de traitement. Dans d'autres étapes du plan d'application (figure 2, figure 4, figure 6) ces tubes perforés (6) servent à accueillir les puits d'injection (7) pour livrer les nanoparticules dans la matrice environnante.

Un exemple de succession des étapes du plan d'application de l'invention est présenté et détaillé ci-dessous :

### 1. Traitement thermique de la zone non saturée (Figure 1)

Les tubes de chauffe internes (1) et externes (2) sont placés dans un matériau contaminé par exemple un sol contaminé (3). Un fluide chauffé, de préférence de l'air / du gaz à haute température chauffé à une température comprise entre 300 et 800°C, et plus préférentiellement comprise entre 500 et 750°C, circule au travers des tubes (1) (2). La chaleur (4) est transférée au sol par conduction thermique et élève progressivement la température du sol. Une très petite quantité de chaleur sera également transférée au sol par rayonnement. La température élevée du sol provoque la volatilisation des contaminants situés dans le sol contaminé, produisant ainsi une vapeur contaminée (5). Les contaminants vaporisés (5) du sol sont mobilisés dans les tubes perforés (6) en imposant une pression négative dans les tubes perforés (6), par ex. en connectant les tuyaux à un système de vide (13). Les vapeurs contaminées se déplacent dans les tubes perforés (6) et peuvent être collectés par un système de tuyauterie de collecte de vapeur transportant le fluide contaminé vers une unité de traitement (14) et/ou sont injectées dans la flamme des tubes chauffants. Le vide est maintenu pendant toute la période de chauffage et pendant un temps suffisant après le chauffage pour éviter les pertes ou la dispersion de contaminants. Le système de vide (13) doit être capable de tirer un vide approprié à la combinaison particulière de perméabilité du sol et de tubes perforés dans un système de traitement (14). Le système de vide (13) peut être capable de tirer un vide dans la plage de 50 Pa à 5000 Pa. Le système de vide peut être un ventilateur ou une pompe étanche à l'eau. Dans un mode de réalisation préféré, un massif drainant (15) est placé autour du tube perforé (6) afin d'assurer une aspiration homogène.

Les tubes (1) (2) sont disposés selon un motif dans le sol contaminé de manière à obtenir le chauffage le plus uniforme tout au long du motif. Un modèle régulier de tuyaux peut être utilisé, tel que triangulaire, carré, rectangulaire, hexagonal, etc. choisi pour couvrir sensiblement la zone contaminée. Les motifs triangulaires sont préférés car ils offrent la meilleure efficacité thermique. La température dans le sol est augmentée en faisant circuler un fluide chauffé à travers les tuyaux (1) (2). La superposition du flux de chaleur de tous les tuyaux se traduit par une augmentation plus uniforme de la température dans le motif. Il sera clair que le nombre de tubes (1) (2) appliqués dans le sol, l'espacement, la position relative des tubes, peuvent varier en fonction du degré de contamination et / ou du temps souhaité pour achever le procédé et / ou du type de sol et / ou des considérations économiques. Dans un mode de réalisation préféré, la distance entre deux tuyaux adjacents est comprise entre 1 m et 1,8 m.

Dans un autre mode de réalisation préféré, les éléments chauffants (1) (2) sont placés horizontalement. Dans ce mode de réalisation préféré, les éléments chauffants horizontaux sont disposés sur des matériaux contaminés excavés et montés sous forme d'une pile.

Les tubes (1) (2) comprennent de préférence des tubes en un matériau résistant à la chaleur tels que, mais sans s'y limiter, l'acier, le métal ou la céramique. Les tubes peuvent avoir toute forme de coupe transversale souhaitée, y compris, mais sans s'y limiter, triangulaire, rectangulaire, carré, hexagonal, ellipsoïdal, rond ou ovale. De préférence, les tubes ont une forme transversale sensiblement ellipsoïdale, ronde ou ovale. Dans un mode de réalisation particulièrement préféré, les tuyaux ont une forme transversale sensiblement ronde et ont un diamètre qui est compris entre 50 et 200 mm et de préférence entre 80 et 180 mm. Les tubes ont une longueur comprise entre 3 et 30 m mètre, et de préférence entre 6 et 18 m.

Les perforations dans les tubes de vapeur (6) peuvent être, mais sans s'y limiter, des trous et / ou des fentes. De préférence, entre 5% et 50% de la surface d'une conduite est pourvue de trous et / ou de fentes. Il est particulièrement préféré qu'une grande quantité de petites perforations soit prévue sur le tube. Les tubes peuvent avoir plusieurs zones perforées à différentes positions sur une longueur du tube. Lorsque les tubes sont insérés dans le sol, les zones perforées peuvent être situées à côté de couches de sol contaminées. Alternativement, les perforations peuvent être prévues sur toute la longueur des tubes.

Selon la présente invention, le sol est chauffé par un chauffage conducteur (4), ce qui est particulièrement avantageux car les températures pouvant être obtenues par un tel chauffage ne sont pas limitées par la quantité d'eau présente dans le sol. Des températures du sol sensiblement supérieures au point d'ébullition de l'eau peuvent être obtenues en utilisant un chauffage conducteur thermique. Des températures du sol d'au moins environ 100°C, 125°C, 150°C, 200°C, 400°C, 500°C, 600°C, 700°C, 800°C ou plus peuvent être obtenues en utilisant un chauffage par conduction thermique. Le chauffage conducteur est très uniforme dans son balayage vertical et horizontal et entraîne une dispersion homogène de la chaleur à travers le sol. En effet, l'énergie thermique injectée dans le sol par les tuyaux est uniforme sur chaque tuyau. En outre, le chauffage conducteur crée une perméabilité en raison du séchage et du rétrécissement du sol surchauffé (c'est-à-dire> 100°C) qui se développe autour de chaque tuyau. Des trajets de flux de vapeur étroitement espacés sont créés même dans les couches étroites de limon et d'argile. Lorsque la vapeur contaminée (5) est éliminée du sol, le niveau d'humidité dans le sol contaminé est sensiblement réduit, de préférence à un niveau d'humidité moyen inférieur à environ 5% en poids, plus préférablement à un niveau d'humidité moyen inférieur à environ 2% par poids, et le plus préférablement à un taux d'humidité moyen inférieur à environ 1% en poids.

### 2. Injection de nanoparticules dans la zone non saturée (Figure 2)

Cette étape de la présente invention vise à dépolluer la zone non saturée des contaminations telles que les métaux lourds et/ou les cyanures et/ou les composés alkyles fluorés.

Des nanoparticules, préférentiellement des oxydes de fer, sont injectées dans la zone insaturée pour assurer une efficacité maximale d'immobilisation des métaux lourds. Les nanoparticules seront introduites dans la zone non saturée en utilisant les tubes perforés (6) au moyen d'un tube d'injection (7) (Figure 2).

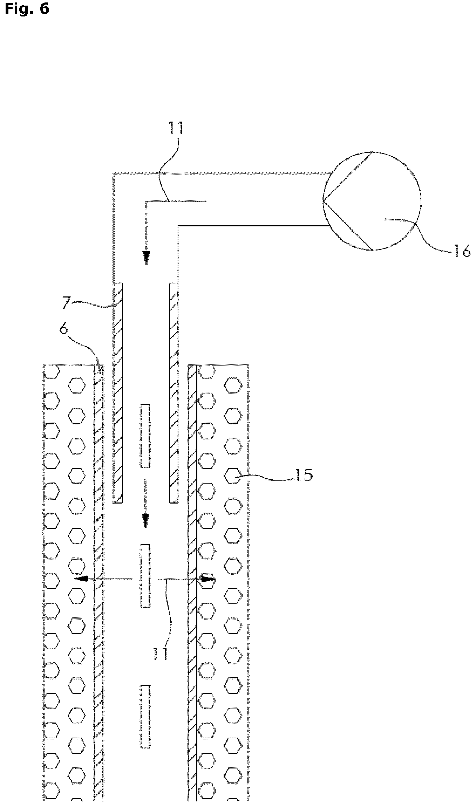

L'injection des nanoparticules s'effectue au moyen d'un système externe acheminant les produits dans le matériau poreux au moyen de par exemple une pompe (16) (Figure 6). Les nanoparticules atteignent au moyen du tube d'injection (7) les perforations du tube perforé (6) avant de rejoindre le sol (3). Dans un mode de réalisation préféré, un massif drainant (15) est placé autour du tube perforé (6) afin d'assurer une dispersion homogène.

Les tubes perforés (6) sont disposés selon un motif dans le sol contaminé de manière à obtenir la dispersion la plus uniforme tout au long du motif. Un modèle régulier de tuyaux peut être utilisé, tel que triangulaire, carré, rectangulaire, hexagonal, etc. choisi pour couvrir sensiblement la zone contaminée. Dans un mode de réalisation, chaque tube perforé (6) accueille un tube d'injection (7). Dans un autre mode de réalisation préféré, seulement certains tubes perforés accueillent des tubes d'injection (7). Enfin, dans un dernier mode de réalisation préféré un réseau de puits supplémentaire est ajouté aux puits nécessaires pour la première étape de l'invention. Ces tubes d'injection supplémentaires sont placés préférentiellement à 2 à 2,5 mètres les uns des autres. Le nombre de points d'injection (7) appliqués dans le sol, l'espacement, la position relative des tubes, peuvent varier en fonction du degré de contamination et / ou du temps souhaité pour achever le procédé et / ou du type de sol et / ou des considérations économiques.

Les tubes d'injection (7), utilisé pour livrer les matériaux dans la matrice poreuse, peuvent avoir toute forme de coupe transversale souhaitée, y compris, mais sans s'y limiter, triangulaire, rectangulaire, carré, hexagonal, ellipsoïdal, rond ou ovale. De préférence, les tubes ont une forme transversale sensiblement ellipsoïdale, ronde ou ovale. Dans un mode de réalisation particulièrement préféré, les tubes d'injection (7) ont une forme transversale sensiblement ronde et ont un diamètre qui est compris entre 15 et 90 mm et de préférence entre 20 et 65 mm.

Dans un mode de réalisation préféré, l'étape précédent l'injection des nanoparticules dans la zone vadose est l'étape de traitement thermique de cette zone. En effet, l'homogénéisation de la propagation des oxydes de fer est facilitée par la chauffe préalable, la perméabilité du matériau ayant augmentée. L'injection des nanoparticules après le chauffage est également bénéfique pour le refroidissement du sol par le fluide porteur des nanoparticules.

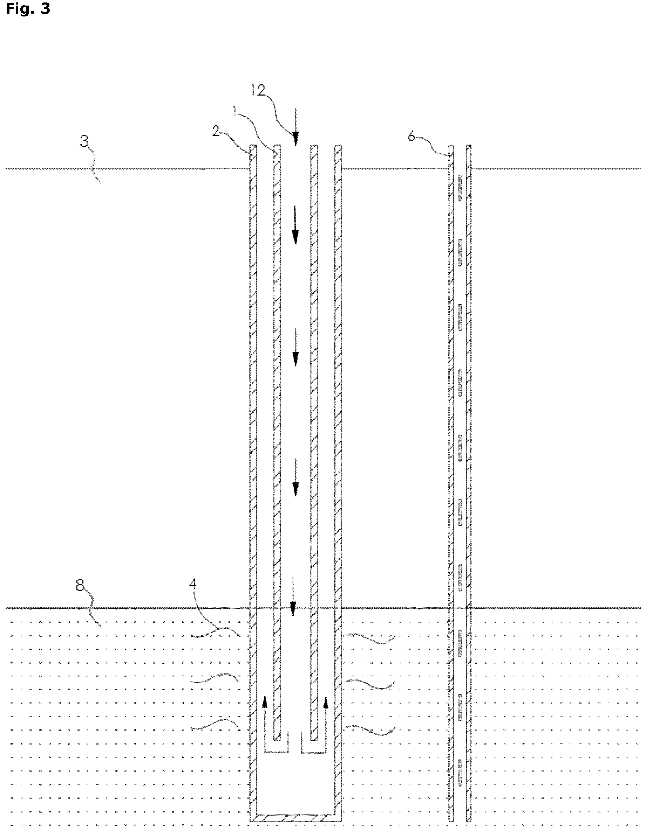

### 3. Chauffage thermique de l'aquifère (Figure 3)

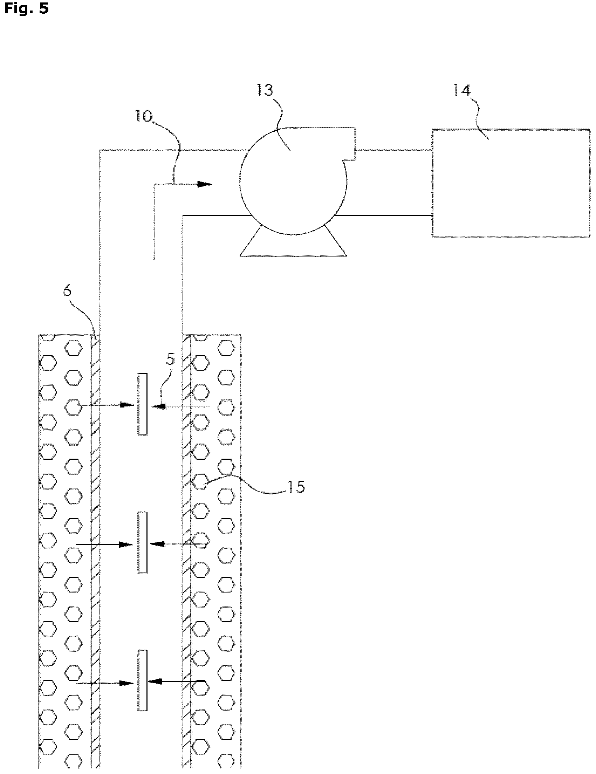

Conformément à l'étape de traitement thermique décrite plus haut, la zone saturée du sol (8) est chauffée à une température comprise entre 30 et 100°C, et plus préférentiellement comprise entre 60 et 80°C. Les mêmes tubes de chauffe (1) (2) et d'extraction (6) sont utilisés durant cette phase (Figure 3). Les vapeurs produites (10) sont récoltées par le même système d'extraction (Figure 5) et envoyée en traitement (14).

Dans un mode de réalisation préféré, les matières organiques en phase libre dans les eaux souterraines peuvent être extraites par un système de pompage et traitées à la surface. L'extraction est facilitée par la montée en température (4) de la nappe, les contaminants organiques présentant une plus grande solubilité et mobilité.

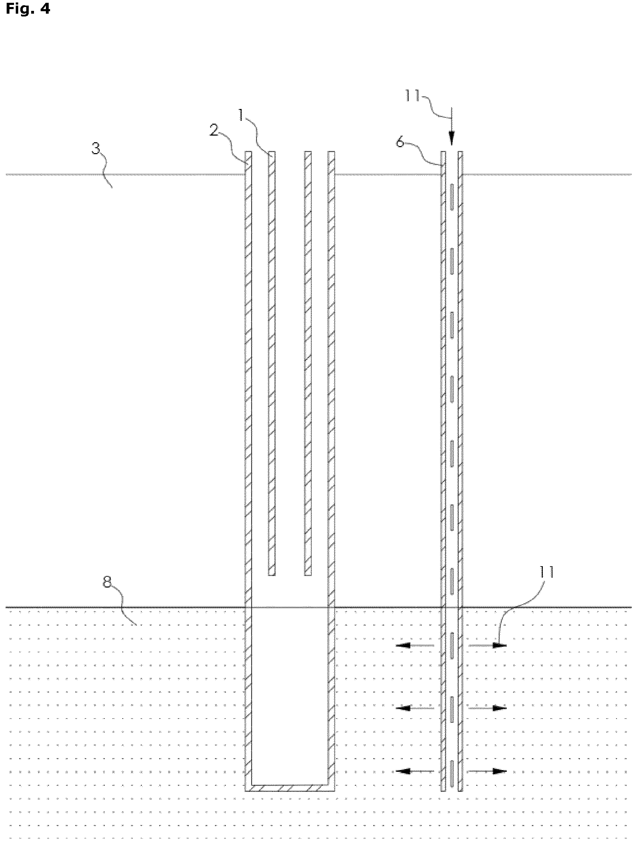

### 4. Traitement de l'aquifère avec des nanoparticules (Figure 4)

Des nanoparticules d'oxyde de fer sont injectées via les tubes perforés (6) dans l'aquifère (8) afin de refroidir l'eau chauffée et d'immobiliser les métaux lourds présents dans la nappe et d'empêcher leur propagation (Figure 4).

Le système d'injection des nanoparticules est le même que décrit plus haut (Figure 6) : un système externe composé d'une pompe (16) est relié au tube d'injection (7) placé dans le tube perforé (6).

### Niveau d'innovation et de réactivité de l'invention

La présente invention cible les polluants dans le sol et les eaux souterraines, grâce aux quatre phases du plan d'application. Dans d'autres modes de réalisation préférés, seulement la zone vadose et/ou l'aquifère est traitée. Dans d'autres modes de réalisation préférés, des terres excavées et empilées sont traitées par la présente invention.

Outre la possibilité de traiter les différentes couches du sol. La présente invention a pour avantage de cibler plusieurs types de contaminations mais également des cocktails de polluants.

L'invention offre des réductions significatives des coûts de restauration des sols et des eaux souterraines par rapport aux pratiques traditionnelles d'excavation et d'enfouissement. En combinant le traitement thermique et l'immobilisation in situ afin de s'attaquer à l'ensemble des contaminants préoccupants (métaux lourds et matières organiques), la solution proposée réduit considérablement le coût du cycle de vie en raccourcissant le temps d'assainissement par rapport, par exemple, au pompage et au traitement des eaux souterraines, en atteignant de meilleurs niveaux de remédiation et en évitant l'excavation.

La solution proposée permet notamment de traiter toute contamination organique In Situ, dans la zone vadose, sans aucune excavation. La fixation des métaux lourds se fera par les mêmes puits (6). Ainsi, l'invention décontamine tous les contaminants présents dans la zone vadose.

Les métaux lourds sont immobilisés In Situ par injection dans les mêmes puits (6). Ladite invention est adaptée à tout contaminant organique dont le point d'ébullition est inférieur à 550°C. Par conséquent, les PCB et les COV ont été traités avec succès par cette technologie mais également des substances inorganiques spécifiques telles que les cyanures et le mercure.

De même, les particules adsorbent et fixent de nombreux métaux lourds toxiques. L'arsenic, le plomb, le zinc, le nickel et le cadmium sont parmi les contaminants éliminés des eaux souterraines. Les oxydes de fer peuvent adsorber des métaux dans une large gamme de pH, en particulier dans des conditions neutres et alcalines. L'invention présente une technologie capable de faire face à de fortes variations de pH, de niveau de contamination et de cocktails de contamination. L'invention n'est pas affectée par des conditions aérobies/anaérobies. L'invention s'appuie sur le transfert de chaleur par conduction dans la matrice de l'aquifère, ce qui est indépendant du type de sol, y compris les couches anthropiques et industrielles. La taille minuscule des nanoparticules, d'autre part, leur permet de voyager à travers les plus petits pores de la matrice sans altérer les propriétés hydrauliques du sol, ce qui permet un traitement dans toutes les couches du sol.

L'invention est applicable dans une large gamme de perméabilités du sol. L'énergie thermique fournie par les puits en acier chauffe le sol, les contaminants et l'eau par conduction thermique et, dans une certaine mesure, par rayonnement et convection. Lorsque les puits atteignent des températures entre 100°C et 500°C, des gradients de température se créent dans tout le sol. La conductivité thermique du sol variant sur une plage très étroite - seulement par un facteur de 3 - le chauffage conductif est efficace et prévisible, peu importe la perméabilité du sol ou son degré d'hétérogénéité. D'autre part, la taille des nanoparticules se situant entre 200 et 500 nm, elles sont capables d'atteindre les pores et d'adsorber les métaux lourds même dans des milieux peu perméables et hétérogènes.

### LÉGENDE DES FIGURES

1. Tube de chauffe interne
2. Tube de chauffe externe
3. Zone vadose
4. Chaleur générée
5. Vapeurs générées
6. Tube d'extraction des vapeurs
7. Tubes d'injection
8. Nappe
9. Chauffage du sol
10. Récupération des contaminants
11. Injection des nanoparticules
12. Chauffage de la nappe
13. Fan
14. Unité de traitement des vapeurs
15. Solide drainant
16. Pompe

## Revendications

1. Procédé de traitement de sols et d'eaux souterraines comprenant une alternance de chauffage du sol et d'injection de nanoparticules comprenant :
- un ensemble d'au moins un tube de chauffage du sol combiné à au moins un tube perforé afin d'extraire les vapeurs volatiles et semi-volatiles et d'injecter des nanoparticules ;
- un système de chauffage connecté en surface pour augmenter la température des éléments chauffants ;
- l'injection à des moments choisis en fonction de la température, de nano-particules sous forme colloïdale dans la matrice du sol ;
- l'injection à des profondeurs différentes de nanoparticules en fonction de la phase de chauffage ;
- la récupération de vapeurs à des profondeurs spécifiques en fonction des injections de nanoparticules afin de favoriser la stabilisation des métaux lourds.

2. Procédé selon la revendication 1 dans lequel les éléments de chauffage sont perforés et utilisés alternativement pour la récupération de vapeurs et pour l'injection de nano-particules.

3. Procédé selon les revendications 1 et 2 dans lequel un réseau séparé de tubes de récupération de vapeurs est placé dans la zone à traiter.

4. Procédé selon les revendications 1 à 3 dans lequel un réseau séparé d'injection de nanoparticules est installé.

## Patentansprüche

1. Verfahren zur Behandlung von Boden und Grundwasser umfassend abwechselnde Bodenerwärmung und Injektion von Nanopartikeln, umfassend:
- einen Satz von mindestens einem Bodenheizungsrohr, kombiniert mit mindestens einem perforierten Rohr, um flüchtige und halbflüchtige Dämpfe zu extrahieren und Nanopartikel zu injizieren;
- ein mit der Oberfläche verbundenes Heizsystem, um die Temperatur der Heizelemente zu erhöhen;
- Injektion von Nanopartikeln in kolloidaler Form in die Bodenmatrix zu ausgewählten Zeitpunkten in Abhängigkeit von der Temperatur;
- Injektion von Nanopartikeln in unterschiedlichen Tiefen in Abhängigkeit von der Heizphase;
- dampfrückgewinnung in bestimmten Tiefen in Abhängigkeit von der Injektion der Nanopartikel, um die Stabilisierung der Schwermetalle zu fördern.

2. Verfahren nach Anspruch 1, wobei die Heizelemente perforiert sind und abwechselnd zur Dampfrückgewinnung und zur Injektion von Nanopartikeln verwendet werden.

3. Verfahren nach einem der Ansprüche 1 und 2, wobei ein separates Netz von Dampfrückgewinnungsrohren in der zu behandelnden Zone angeordnet wird.

4. Verfahren nach einem der Ansprüche 1 bis 3, wobei ein separates Netz zur Injektion von Nanopartikeln installiert wird.

## Claims

1. Method for treating soil and groundwater comprising alternating soil heating and nanoparticle injection comprising:
- a set of at least one soil heating tube combined with at least one perforated tube to extract volatile and semi-volatile vapors and to inject nanoparticles;
- a surface-connected heating system to raise the temperature of the heating elements;
- injection of nanoparticles in colloidal form into the soil matrix at selected times depending on the temperature;
- injection of nanoparticles at different depths depending on the heating phase;
- vapor recovery at specific depths depending on the nanoparticle injections, to promote stabilization of heavy metals.

2. Method according to claim 1 wherein the heating elements are perforated and used alternately for vapor recovery and for nanoparticle injection.

3. Method according to claims 1 and 2 wherein a separate network of vapor recovery tubes is placed in the zone to be treated.

4. Method according to claims 1 to 3 wherein a separate nanoparticle injection network is installed.
